(19) Europäisches Patentamt
European Patent Office
Office européen des brevets

(11) EP 3 489 270 A1

(12) **EUROPEAN PATENT APPLICATION**

(43) Date of publication:
**29.05.2019 Bulletin 2019/22**

(21) Application number: **17306651.5**

(22) Date of filing: **28.11.2017**

(51) Int Cl.:
***C08G 59/24*** *(2006.01)*
***C08G 59/30*** *(2006.01)*
***C08G 59/32*** *(2006.01)*
***C08G 59/36*** *(2006.01)*
***C08G 59/38*** *(2006.01)*
***G02B 1/10*** *(2015.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ESSILOR INTERNATIONAL (COMPAGNIE GENERALE D'OPTIQUE)**
**94220 CHARENTON LE PONT (FR)**

(72) Inventors:
- **ZHENG, Haipeng**
  **DALLAS, TX Texas 75235 (US)**
- **FREEMAN, Matthew**
  **Dallas, TX Texas 75235 (US)**

(74) Representative: **Jacobacci Coralis Harle**
**32, rue de l'Arcade**
**75008 Paris (FR)**

(54) **HEAT-CURABLE HYBRID EPOXY FUNCTIONAL COMPOSITION AND TRANSPARENT HEAT-CURED ABRASION-RESISTANT COATINGS PREPARED THEREFROM**

(57) The present invention relates to a heat-curable composition comprising at least one epoxy monomer comprising two or three epoxy groups, which is not a hydrolysis-polymerizable silicon compound ("monomer (a)"), at least one epoxy compound bearing at least one silicon atom having at least one hydrolyzable group directly linked to the silicon atom and at least one epoxy group, at least one epoxy ring-opening catalyst and at least one organic solvent selected from glycol monoethers. The composition comprises less than 10 % by weight of monomers (a) and provides upon curing a coating having improved hardness properties.

EP 3 489 270 A1

## Description

The present invention relates to heat-curable epoxy functional compositions, to abrasion- and/or scratch-resistant epoxy-based coatings obtained therefrom, and to optical articles, in particular ophthalmic lenses, containing such coatings.

In the optics field, it is usual to coat articles with coatings so as to impart to the articles various mechanical and/or optical properties. Thus, classically, coatings such as impact-resistant, anti-abrasion/scratch-resistant and/or antireflection coatings are successively formed onto an ophthalmic lens.

It may be desirable to impart a color, or a filtering function to the optical article so as to prevent or limit transmission of harmful light to the retina, but this should be done without modifying its properties such as abrasion resistance, transparency or adhesion of the coatings.

Indeed, visible light as perceived by humans approximately extends over a spectrum ranging from a 380 nm wavelength to a 780 nm wavelength. The part of this spectrum ranging from around 400 nm to around 500 nm does correspond to high-energy wavelengths, essentially blue light.

Many studies (see for example Kitchel E., "The effects of blue light on ocular health", Journal of Visual Impairment and Blindness Vol. 94, No. 6, 2000 or Glazer-Hockstein and al., Retina, Vol. 26, No.1. pp. 1-4, 2006) suggest that part of the blue light has phototoxic effects on human eye health, and especially on the retina. Ocular photobiology studies demonstrated that an excessively prolonged or intense exposure to blue light may induce severe ophthalmic diseases such as age-related macular degeneration (ARMD) or cataract. Thus, it is recommended to limit the exposure to blue light potentially harmful, in particular as regards the wavelength band with an increased dangerousness (420-450 nm).

It is furthermore necessary to eliminate as much as possible the harmful influence of ultraviolet light (UV light) on the eye of a user. Ultraviolet (UV) light is the portion of the luminous spectrum ranging from 100 to 380 nm. Amongst the UV bands reaching the earth surface, the UVA band, ranging from 315 nm to 380 nm, and the UVB band, ranging from 280 nm to 315 nm, are particularly harmful to the retina.

Further, it is recommended to limit exposure of the eyes to harmful near infrared light (NIR), which covers the wavelength range from 780 to 1400 nm. Acute NIR exposure is well known to lead to cataract, and recent investigations showed strong presumption that cataract can also be triggered upon chronic NIR exposure.

To alleviate such damages, it has been suggested to cut at least partially UV light, NIR light and/or the troublesome part of the blue light spectrum from 400 nm to 460 nm, for example in the patent application WO 2008/024414, by means of lenses comprising a film partially inhibiting the light in the suitable wavelength range, through absorption or through reflection. This can be done by incorporating a yellow dye into the optical element.

The application US 2015/008370 discloses hybrid epoxy-polysiloxane based coating and flooring compositions exhibiting improved flexibility, and excellent weatherability and corrosion resistance after curing. They are prepared by combining a polysiloxane, an epoxide resin material and a curing system.

European patent application n° 16 306 548.5 discloses a heat-curable composition comprising 10-50 % by weight of epoxy monomers comprising two or three epoxy groups, which are not a hydrolysis-polymerizable silicon compounds, at least one epoxy compound bearing at least one silicon atom having at least one hydrolyzable group directly linked to the silicon atom and at least one epoxy group, and at least one epoxy ring-opening catalyst. The composition comprises at least 50 % by weight of compounds having at least one epoxy group, relative to the total weight of polymerizable compounds present in the composition and provides upon curing a coating having limited abrasion- and/or scratch-resistance. In order to obtain an optical article having high hardness, a hard coat should be additionally deposited, with an additional cost.

Incorporating in a coating an optical filtering dye able to cut specific ranges of wavelengths can prove difficult, as it is necessary to adapt the formulation of the optical coating composition. It is especially difficult to get a transparent coating without haze, due to poor solubility of dyes, and the adaptation of the formulation in order to solubilize the dyes might modify the properties of the coating.

Another problem is that most of absorbing dyes used for making optical articles with optical filtering capability, and in particular yellow dyes from families such as perylene, coumarin, porphyrin and acridine, show photo-stability issues when exposed to the UV rays and/or sunlight.

Moreover, in order to avoid only in-situ coating processes, there is a need for a coating composition that is stable for several weeks in at least one or more of the following conditions: when stored at low temperatures (such as -18°C in freezer) or a specific temperature such or 4°C (in fridge), when stored in a temperature range 5-10°C such as a temperature-controlled coating tank and/or when stored at ambient temperature, and that can be conveniently applied by dip coating or spin coating.

In view of the foregoing, there is a need for an optical article capable of at least partially blocking transmission of light in a selected wavelength range of the light spectrum without affecting the functional properties of other coatings.

The final cured coating should be resistant to scratch and abrasion like usual hard coats, transparent, compatible with and adhering to the substrate or additional layers, and exhibit overall performances such as improved cosmetic

appearance (low haze), high light filtering efficiency with low photo-degradation.

The process for manufacturing such an article should be simple, easy to implement, reproducible and involve an optimized curing sequence.

It has been surprisingly found that it was possible to obtain a sol-gel coating composition having a long term stability and the ability to provide a coating with the above mentioned coating performances, in particular high hardness and optionally a filtering function, by incorporating epoxysilanes into the coating composition, a limited amount of multifunctional non silicon-containing epoxy monomers and a specific compound enhancing solubility of dyes in the coating composition. This coating can thus be used as a single layer hard coat.

To address the needs of the present invention and to remedy to the mentioned drawbacks of the prior art, the applicant provides a heat-curable composition comprising:

(a) at least one epoxy monomer having two or three epoxy groups, which is not a silicon compound having at least one hydrolyzable group directly linked to the silicon atom, monomers (a) representing less than 10 % by weight, relative to the total weight of the composition,
(b) at least one epoxy compound bearing at least one silicon atom having at least one hydrolyzable group directly linked to the silicon atom and at least one function comprising an epoxy group linked to the silicon atom through a carbon atom, and/or a hydrolyzate thereof,
(c) at least one epoxy ring-opening catalyst, and
(e) at least one organic solvent selected from glycol monoethers.

Detailed description of the invention

As used herein, when an article comprises one or more layer(s) or coating(s) on the surface thereof, "depositing a layer or a coating onto the article" means that a layer or a coating is deposited onto the uncovered (exposed) surface of the article external coating, that is to say the coating that is the most distant from the substrate.

As used herein, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coating(s) may be interleaved between the substrate/coating and the relevant coating (however, it does preferably contact said substrate/coating), and (iii) does not necessarily completely cover the substrate/coating. When "a coating 1 is said to be located under a coating 2", it should be understood that coating 2 is more distant from the substrate than coating 1.

The optical article according to the invention is preferably a transparent optical article, in particular an optical lens or lens blank, more preferably an ophthalmic lens or lens blank.

The term "ophthalmic lens" is used to mean a lens adapted to a spectacle frame to protect the eye and/or correct the sight. Said lens can be chosen from afocal, unifocal, bifocal, trifocal and progressive lenses. Although ophthalmic optics is a preferred field of the invention, it will be understood that this invention can be applied to optical elements of other types where filtering specified wavelengths may be beneficial, such as, for example, lenses for optical instruments, safety goggles, filters particularly for photography, astronomy or the automobile industry, optical sighting lenses, ocular visors, optics of lighting systems, screens, glazings, etc.

If the optical article is an optical lens, it may be coated on its front main surface, rear main side, or both sides with the coating of the invention. As used herein, the rear face of the substrate is intended to mean the face which, when using the article, is the nearest from the wearer's eye. It is generally a concave face. On the contrary, the front face of the substrate is the face which, when using the article, is the most distant from the wearer's eye. It is generally a convex face. The optical article can also be a piano article.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more functional coatings or layers.

The substrate of the optical article, coated on at least one main face with a coating according to the invention, may be a mineral or an organic glass, for instance an organic glass made from a thermoplastic or thermosetting plastic, generally chosen from transparent materials of ophthalmic grade used in the ophthalmic industry.

To be mentioned as especially preferred classes of substrate materials are polycarbonates, polyamides, polyimides, polysulfones, copolymers of polyethylene therephthalate and polycarbonate, polyolefins such as polynorbornenes, resins resulting from polymerization or (co)polymerization of alkylene glycol bis allyl carbonates such as polymers and copolymers of diethylene glycol bis(allylcarbonate) (marketed, for instance, under the trade name CR-39® by the PPG Industries company. Marketed lenses obtained by polymerizing of diethylene glycol bis (allylcarbonate) are referred to as ORMA® lenses from ESSILOR), polycarbonates such as those derived from bisphenol A, (meth)acrylic

or thio(meth)acrylic polymers and copolymers such as polymethyl methacrylate (PMMA), urethane and thiourethane polymers and copolymers, epoxy polymers and copolymers, episulfide polymers and copolymers.

Prior to depositing coatings, the surface of the substrate is usually submitted to a physical or chemical surface activating and cleaning treatment, so as to improve the adhesion of the layer to be deposited, such as disclosed in WO 2013/013929.

The optical article comprises a substrate having at least one main surface bearing a coating resulting from the heat-curing of a heat-curable hard coating composition according to the invention. Said coating is an epoxy coating, resulting from the polymerization of compounds (a), (b) and optionally (d), which all comprise at least one epoxy group. In the present invention, a coating containing hybrid epoxy copolymers will be generated by using epoxy compounds (a) and optionally (d) according to the invention, devoid of reactive silicon atom, together with organosilanes (b).

The epoxy compounds according to the invention are cyclic ethers and are preferably epoxides (oxiranes). As used herein, the term epoxide represents a subclass of epoxy compounds containing a saturated three-membered cyclic ether. The epoxy groups of compounds (a), (b) and (d) are preferably chosen from glycidyl groups and cycloaliphatic epoxy groups, more preferably from alkyl glycidyl ether groups and cycloaliphatic epoxy groups.

In the present patent application, the term "alkyl" means a linear or branched, saturated or unsaturated monovalent hydrocarbon-based radical, preferably containing from 1 to 25 carbon atoms. The term alkyl includes acyclic groups preferably containing from 1 to 8 carbon atoms, more preferably from 1 to 6 carbon atoms, such as methyl, ethyl, n-propyl, isopropyl, butyl and n-hexyl groups, the cycloaliphatic and cycloalkyl groups preferably containing from 3 to 7 carbon atoms, the cycloalkylmethyl groups preferably containing from 4 to 8 carbon atoms.

In an embodiment, the alkyl group is connected via an sp3 carbon atom and may be substituted with one or more aryl groups and/or may comprise one or more heteroatoms such as N, S, O or an halogen. Examples that can be mentioned include arylalkyl groups such as the trityl group (-CPh3), the benzyl group or the 4-methoxybenzyl group, alkoxyalkyl groups, especially dialkoxymethyl groups such as diethoxymethyl or dimethoxymethyl groups, $CH_2CO_2R^{11}$ groups, in which $R^{11}$ represents an optionally substituted alkyl or aryl group.

The term "cycloalkyl" also includes "heterocycloalkyl" groups, i.e. non-aromatic monocyclic or polycyclic rings in which one or more carbon atoms of the ring(s) have been replaced with a heteroatom such as nitrogen, oxygen, phosphorus or sulfur. The heterocycloalkyl group preferably comprises 1 to 4 endocyclic heteroatoms. The heterocycloalkyl groups may be structures containing one or more nonaromatic rings.

The term "cycloaliphatic" denotes a saturated or unsaturated but non aromatic carbocyclic radical comprising one or several optionally fused rings, which may optionally be substituted with one or more of the groups cited above for the aryl group. The term "cycloaliphatic" also includes "heterocycloaliphatic" groups, i.e. non-aromatic monocyclic or polycyclic rings in which one or more carbon atoms of the ring(s) have been replaced with a heteroatom such as nitrogen, oxygen, phosphorus or sulfur. The cycloaliphatic group is preferably a cycloalkyl group.

The term "aryl" denotes an aromatic carbocyclic radical comprising only one ring (for example a phenyl group) or several, optionally fused, rings (for example naphthyl or terphenyl groups), which may optionally be substituted with one or more groups such as, without limitation, alkyl (for example methyl), hydroxyalkyl, aminoalkyl, hydroxyl, thiol, amino, halo (fluoro, bromo, iodo or chloro), nitro, alkylthio, alkoxy (for example methoxy), aryloxy, monoalkylamino, dialkylamino, acyl, carboxyl, alkoxycarbonyl, aryloxycarbonyl, hydroxysulfonyl, alkoxysulfonyl, aryloxysulfonyl, alkylsulfonyl, alkylsulfinyl, cyano, trifluoromethyl, tetrazolyl, carbamoyl, alkylcarbamoyl or dialkylcarbamoyl groups. Alternatively, two adjacent positions of the aromatic ring may be substituted with a methylenedioxy or ethylenedioxy group.

The term "aryl" also includes "heteroaryl" groups, i.e. aromatic rings in which one or more carbon atoms of the aromatic ring(s) have been replaced with a heteroatom such as nitrogen, oxygen, phosphorus or sulfur.

Compound (a) according to the invention is a bi- or tri-functional epoxy monomer having two or three epoxy groups per molecule, which is not a silicon compound having at least one hydrolyzable group directly linked to the silicon atom. In the present application, Si-O-Si groups are considered as not being hydrolyzable groups. In one embodiment, compound (a) does not comprise any silicon atom. In the present application, oligomers are considered as being monomers.

More preferably, compound (a) according to the invention does not contain other reactive functions than the epoxy group(s), capable of reacting with other polymerizable functions present in the composition and that would be linked to the polymer matrix of the coating. In other words, preferred epoxy compounds are "pure" epoxy compounds.

Compound (a) preferably comprises two or three glycidyl ether groups and/or cycloaliphatic epoxy groups. The glycidyl ether group is preferably an alkyl glycidyl ether group.

Glycidyl ethers are synthetic compounds characterized by the following group in which $R_1$ denotes a monovalent group:

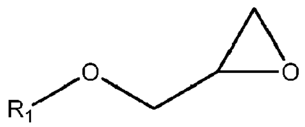

The preferred cycloaliphatic epoxy groups are shown hereunder, in which the hydrogen atoms in the structures may be substituted by one or more substituents such as those cited above as substituents for an aryl group:

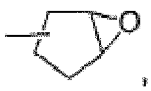,
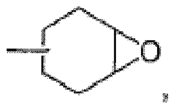,
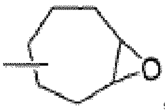,

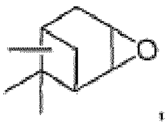,
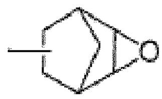, and
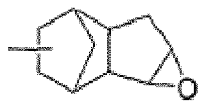

In one embodiment, compound (a) comprises a β-(3,4-epoxycyclohexyl)alkyl group such as the β-(3,4-epoxycyclohexyl)methyl and β-(3,4-epoxycyclohexyl)ethyl groups.

Compound (a) can be selected from the group consisting of trimethylolethane triglycidyl ether, trimethylolmethane triglycidyl ether, trimethylolpropane triglycidyl ether (Erisys™ GE-30, from CVC thermoset Specialties), triphenylolmethane triglycidyl ether, trisphenol triglycidyl ether, tetraphenylol ethane triglycidyl ether, tetraglycidyl ether of tetraphenylol ethane, p-aminophenol triglycidyl ether, 1,2,6-hexanetriol triglycidyl ether, glycerol triglycidyl ether, diglycerol triglycidyl ether, glycerol ethoxylate triglycidyl ether, castor oil triglycidyl ether, propoxylated glycerine triglycidyl ether, ethylene glycol diglycidyl ether, 1,4-butanediol diglycidyl ether, neopentyl glycol diglycidyl ether, cyclohexanedimethanol diglycidyl ether, dipropylene glycol diglycidyl ether, polypropylene glycol diglycidyl ether, dibromoneopentyl glycol diglycidyl ether, hydrogenated bisphenol A diglycidyl ether (Epalloy® 5000 from CVC Specialty Chemicals), 3',4'-epoxycyclohexylmethyl-3,4-epoxycyclohexane carboxylate (Uvacure® 1500 from UCB Chemicals, Cyracure® UVR-6110 and UVR® 6105 from Union Carbide), bis (3,4-epoxycyclohexylmethyl) adipate (UVR-6128 from Dow Chemical Company), limonene diepoxide (6-methyl-3-(2-methyloxiran-2-yl)-7-oxabicyclo[4.1.0]heptane, Celloxide 3000 from Daicel Chemical Industries Ltd.), 1,3-bis[2-(3,4-epoxycyclohexyl)ethyl]tetramethyldisiloxane (SIB1092.0 from Gelest, formula Xr), bisphenol A diglycidyl ether resins (n generally ranging from 0 to 25, Epon 828 from Shell Chemical, formula Xb), hexahydrophthalic anhydride diglycidyl ester (CY® 184 from Ciba) and derivatives thereof of formulae Xn and Xo, and mixtures thereof. One can also use Epalloy® 5001 from CVC Specialty Chemicals, which is a faster cure version of Epalloy® 5000 through increased epoxy functionality (two-component mixture, functionality = 2.4).

In one embodiment of the invention, the composition further comprises at least one compound (d), which is a polyfunctional epoxy monomer, comprising from 4 to 8 epoxy groups (preferably 4 to 6) that is not a silicon compound having at least one hydrolyzable group directly linked to the silicon atom. In one embodiment, compound (d) does not comprise any silicon atom.

Compounds (a) provide coatings having a lower cross-link density than highly functionalized compounds (d) after a final post-cure. Thus, the presence of compounds (d) can improve mechanical properties of a matrix such as abrasion and/or scratch resistance.

More preferably, compound (d) according to the invention does not contain other reactive functions than the epoxy group(s), capable of reacting with other polymerizable functions present in the composition and that would be linked to the polymer matrix of the coating. In other words, preferred epoxy compounds are "pure" epoxy compounds.

Compound (d) preferably comprises 4 to 8 glycidyl ether groups and/or cycloaliphatic epoxy groups. The glycidyl ether group is preferably an alkyl glycidyl ether group.

The preferred cycloaliphatic epoxy groups are the same as those shown for compounds (a). In one embodiment, compound (d) comprises a β-(3,4-epoxycyciohexyl)alkyl group such as the β-(3,4-epoxycyclohexyl)methyl and β-(3,4-epoxycyclohexyl)ethyl groups.

Compound (d) can be selected from the group consisting of diglycerol tetraglycidyl ether, pentaerythritol tetraglycidyl ether, sorbitol polyglycidyl ether (Erisys™ GE-60, from CVC thermoset Specialties), 1,1,1-tris-(p-hydroxy phenyl) ethane triglycidyl ether (EPALLOY® 9000 from CVC Specialty Chemicals), 1,1,1-tris-(p-hydroxyphenyl) methane triglycidyl ether (Tactix 742 from Ciba), tetrakis (4-hydroxyphenyl) ethane tetraglycidyl ether (Epon 1031 from Shell Chemical, formula Xi), epoxycyclohexyl POSS® Cage Mixture (EP0408 from Hybrid Plastics, having 8 epoxy groups,

formula Xd), the 2-(3,4-epoxycyclohexyl)ethyl compound of formula Xs (available from Gelest), and mixtures thereof.

The compounds corresponding to the formulae cited in the above paragraphs are represented hereunder:

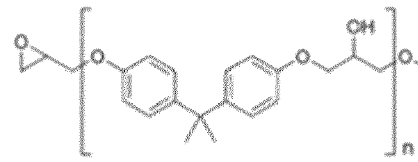
Xb

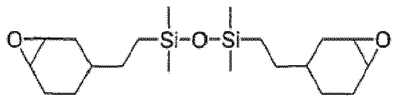
Xr

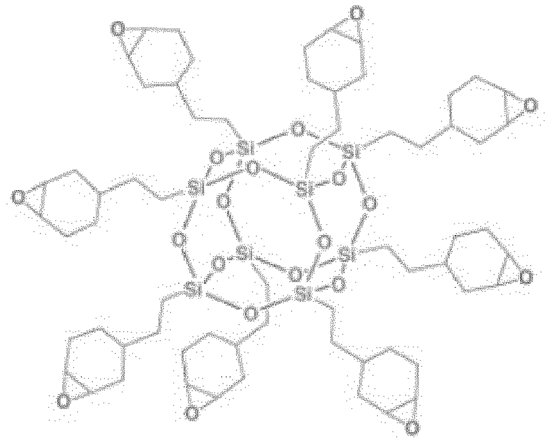
Xd

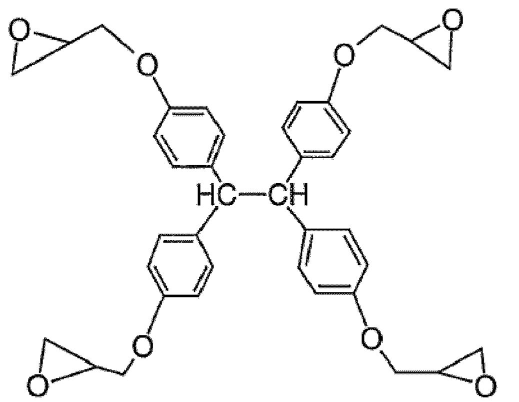
Xi

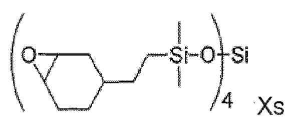
Xs

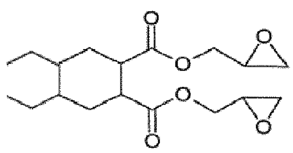
Xn

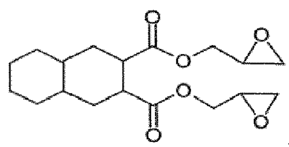
Xo

The composition necessarily comprises less than 10 % by weight of monomers (a), relative to the total weight of the composition, preferably less than 9 %, more preferably less than 8 %, even more preferably less than 7 % or 6 % or less, by weight.

In one embodiment, the composition comprises less than 10 % by weight of monomers (a) and (d) (if present), relative to the total weight of the composition, preferably less than 9 %, more preferably less than 8 %, even more preferably less than 7 % or 6 % or less, by weight.

It has been surprisingly found that limiting the amount of compounds (a) and (d) (if present) in the composition led to a significant increase of both the abrasion-resistance and scratch-resistance properties.

The composition preferably comprises from 2 to 9 % by weight of compounds (a) and (d) (if present), more preferably from 3 to 8 %, even more preferably from 4 to 7.5 %, relative to the total weight of the composition. In one embodiment, these ranges are satisfied by the weight of compounds (a).

When compounds (d) are present, they preferably represent from 0.1 to 3 % of the weight of the composition, preferably from 0.2 to 1 %, more preferably from 0.3 to 0.8 %, by weight.

The heat-curable composition comprises at least one compound (b), which is an epoxy compound bearing at least one silicon atom having at least one hydrolyzable group directly linked to the silicon atom and at least one function comprising an epoxy group linked to the silicon atom through a carbon atom, and/or a hydrolyzate thereof. Compound (b) preferably has from 2 to 6, more preferably 2 or 3 functional groups generating a silanol group under hydrolysis. Said compound is considered as being an organic compound, and preferably has formula (II):

$$R_{n'}Y_mSi(X)_{4-n'-m} \qquad (II)$$

in which the R groups are identical or different and represent monovalent organic groups linked to the silicon atom through a carbon atom and that do not contain any epoxy group, the Y groups are identical or different and represent monovalent organic groups linked to the silicon atom through a carbon atom and containing at least one epoxy group,

the X groups are identical or different and represent hydrolyzable groups or hydrogen atoms, m and n' are integers such that m is equal to 1 or 2 and n' + m = 1 or 2.

The integers n and m define three groups of compounds II: compounds of formula $RYSi(X)_2$, compounds of formula $Y_2Si(X)_2$, and compounds of formula $YSi(X)_3$. Among these compounds, epoxysilanes having the formula $YSi(X)_3$ are preferred.

The monovalent R groups linked to the silicon atom through a Si-C bond are organic groups. These groups may be, without limitation, hydrocarbon groups, either saturated or unsaturated, preferably $C_1$-$C_{10}$ groups and better $C_1$-$C_4$ groups, for example an alkyl group, preferably a $C_1$-$C_4$ alkyl group such as methyl or ethyl, an aminoalkyl group, an alkenyl group, such as a vinyl group, a $C_6$-$C_{10}$ aryl group, for example an optionally substituted phenyl group, in particular a phenyl group substituted with one or more $C_1$-$C_4$ alkyl groups, a benzyl group, a (meth)acryloxyalkyl group.

The most preferred R groups are alkyl groups, in particular $C_1$-$C_4$ alkyl groups, and ideally methyl groups.

The X groups lead to an OH group upon hydrolysis. It is worth noting that SiOH bonds may be initially present in the compounds of formula II, which are considered in this case as hydrolyzates. Hydrolyzates also encompass siloxane salts.

The X groups may independently and without limitation represent alkoxy groups -O-$R^1$, wherein $R^1$ preferably represents a linear or branched alkyl or alkoxyalkyl group, preferably a $C_1$-$C_4$ alkyl group, acyloxy groups -O-C(O)$R^3$, wherein $R^3$ preferably represents an alkyl group, preferably a $C_1$-$C_6$ alkyl group, and more preferably a methyl or ethyl group, halogen groups such as Cl and Br, amino groups optionally substituted with one or two functional groups such as an alkyl or silane group, for example the $NHSiMe_3$ group, alkylenoxy groups such as the isopropenoxy group. Hydroxyl groups are considered as being hydrolyzable groups.

Most preferred epoxysilanes are those wherein, in formula II, n'=0, m=1 and X is a C1-C5 alkoxy group, preferably $OCH_3$.

The monovalent Y groups linked to the silicon atom through a Si-C bond are organic groups since they contain at least one epoxy group, preferably one epoxy group. By epoxy group, it is meant a group of atoms, in which an oxygen atom is directly linked to two adjacent carbon atoms or non adjacent carbon atoms comprised in a carbon containing chain or a cyclic carbon containing system. Among epoxy groups, oxirane functions are preferred, i.e. saturated three-membered cyclic ether groups.

The preferred Y groups are groups of formulae III and IV:

III 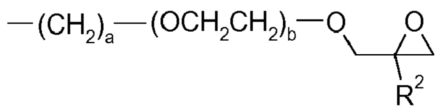

IV 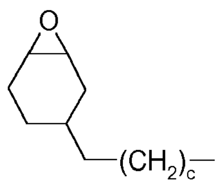

in which $R^2$ is an alkyl group, preferably a methyl group, or a hydrogen atom, ideally a hydrogen atom, a and c are integers ranging from 1 to 6, and b is 0, 1 or 2.

The preferred group having formula III is the γ-glycidoxypropyl group ($R^2$ = H, a = 3, b = 0) and the preferred (3,4-epoxycyclohexyl)alkyl group of formula IV is the β-(3,4-epoxycyclohexyl)ethyl group (c = 1). The γ-glycidoxyethoxypropyl group may also be employed ($R^2$ = H, a = 3, b = 1).

Preferred epoxysilanes of formula II are epoxyalkoxysilanes, and most preferred are those having one Y group and three alkoxy X groups. Particularly preferred epoxytrialkoxysilanes are those of formulae V and VI:

V 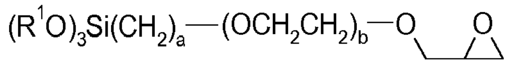

VI 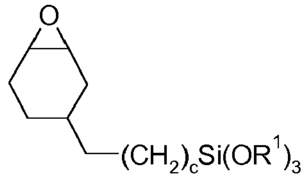

in which $R^1$ is an alkyl group having 1 to 6 carbon atoms, preferably a methyl or ethyl group, and a, b and c are such as defined above.

Examples of such epoxysilanes include but are not limited to γ-glycidoxymethyl trimethoxysilane, γ-glycidoxymethyl triethoxysilane, γ-glycidoxymethyl tripropoxysilane, γ-glycidoxyethyl trimethoxysilane, γ-glycidoxyethyl triethoxysilane, γ-glycidoxyethyl tripropoxysilane, γ-glycidoxypropyl trimethoxysilane, γ-glycidoxypropyl triethoxysilane, γ-glycidoxypropyl tripropoxysilane, γ-glycidoxypropyl methyldiethoxysilane, 2-(3,4-epoxycyclohexyl) ethyltrimethoxysilane, 2-(3,4-epoxycyclohexyl) ethyltriethoxysilane. Other useful epoxytrialkoxysilanes are described in Patents US 4,294,950, US 4,211,823, US 5,015,523, EP 0614957, US 2009/0311518, US 2011/0058142 (compounds of formulae I, VII and VIII) and WO 94/10230. Among those silanes, y-glycidoxypropyltrimethoxysilane (GLYMO) is preferred.

According to one aspect of this invention, hydrolysis-polymerizable compound (b) is generally hydrolyzed before being mixed to the other components of the composition. The hydrolysis may be performed as known in the art, by using acidic catalysts (such as hydrochloric acid, acetic acid...), in the presence of water.

The composition preferably comprises from 10 to 60 % by weight of compounds (b), more preferably from 15 to 50 %, even more preferably from 20 to 40 % or from 25 to 38 % by weight, relative to the total weight of the composition.

In one embodiment, the composition comprises at least 50 % by weight of compounds (b), relative to the total weight of polymerizable compounds present in the composition, more preferably at least 60 %, at least 65 % or at least 70 %, even more preferably at least 75 %.

Despite the epoxysilane is generally under hydrolyzed form, the amount of epoxysilane will be conventionally defined as the weight of the initial precursor before its hydrolysis. Hydrolysis of alkoxy groups liberates the associated alcohol to form silanol groups which will condense spontaneously. Preferably, the alkoxysilane is reacted with a stoichiometric amount of water to hydrolyze the hydrolyzable groups, typically the alkoxy groups.

In some aspects of the invention, the composition comprises 15 to 60 % by weight relative to the total weight of the composition of compounds (a), (d) (if present) and (b), more preferably from 20 to 55 % by weight. The dry extract weight of those epoxy compounds preferably represents at least 50 % of the dry extract weight of the composition, preferably at least 60 %, at least 70 %, at least 80 %, at least 85 %, at least 90 %, at least 92 % or at least 95 % of the dry extract weight of the composition.

The dry extract weight of compounds (a) and (d) (if present) preferably represents 8 to 60 % of the dry extract weight of the composition, more preferably 9 to 50 %, even more preferably 10 to 40 % or 10 to 35 %, relative to the dry extract weight of the composition. In one embodiment, these ranges are satisfied by the dry extract weight of compounds (a). These amounts of compounds (a) and in a lesser extent (d) are preferred to guarantee the solubility of dyes incorporated into the composition and good abrasion and/or scratch resistance.

Indeed, the inventors have found that compounds (a) were required in the composition to provide good solubility to dyes that may be incorporated therein, longer shelf life for the coating solutions (storage stability) and to achieve better cosmetic properties for the resulting articles such as low haze.

In one embodiment, the dry extract weight of compounds (a) and (d) (if present) preferably represents less than 30 % of the dry extract weight of the composition, more preferably less than 25 %, relative to the dry extract weight of the composition. In one embodiment, these ranges are satisfied by the dry extract weight of compounds (a).

In an embodiment, the composition is such that the ratio: dry extract weight of monomers (a) and (d) (if present) / dry extract weight of compounds (b) ranges from 5/95 to 40/60, more preferably from 8/92 to 50/50.

In another embodiment, the composition is such that the weight ratio: monomers (a) / monomers (d) ranges from 100/0 to 75/25, more preferably from 100/0 to 85/15, even more preferably from 95/5 to 90/10.

It is also possible to add to the composition low amounts of additional polymerizable epoxy compounds that are not epoxy compounds (a), (b) or (d) according to the invention, typically less than 20 % by weight relative to the total weight of the composition, more preferably less than 15 % by weight. This amount can be less than 10 % or less than 5 % by weight and even 0 %. Their dry extract weight preferably represents less than 30 % of the dry extract weight of the composition, more preferably less than 20 %, 15 %, 10 %, 5 %. This amount can also be 0 %. Examples of such compounds are mono-oxetane compounds such as 3-ethyl-3-hydroxymethyloxetane, which can be added to improve the resistance of the coating to removal by a 10 % wt. solution of sodium hydroxide after post-cure at 90-140°C.

The heat-curable composition comprises at least 50 %, preferably at least 60 %, more preferably at least 75, 80, 85, 90, 95 or 100 % by weight of compounds having at least one epoxy group (preferably compounds (a), (b) and (d), when present), relative to the total weight of polymerizable compounds (or epoxy compounds) present in the composition. It should be noted that colloidal particles of at least one metal oxide or metalloid oxide are not considered as polymerizable compounds.

The heat-curable composition according to the invention preferably comprises less than 25 % by weight relative to the total weight of the composition, more preferably less than 20 % by weight, of acrylic and/or methacrylic monomers, and more preferably of non-epoxy containing monomers. This amount can be less than 10 % or less than 5 % by weight and even 0 %. In other words, in an embodiment, the composition is devoid of any non epoxy functional monomers.

The dry extract weight of acrylic and/or methacrylic monomers preferably represents less than 30 % of the dry extract weight of the composition, more preferably less than 25 %, 20 %, 10 %, 5 %. This amount can also be 0 %. These amounts also preferably apply to non-epoxy containing monomers.

The dry extract weight can be calculated as a theoretical dry extract weight as disclosed in US 2012/0295084 or EP614957.

The dry extract weight can also be experimentally obtained. The dry extract of a compound or composition is the total weight of the compound or composition after the full removal of volatile solvent(s) at 100°C to 110°C in an oven. The dry extract is also called solids content, percent nonvolatile material by weight or %NVM. Traditional procedures to determine solids take 60 min at 105°C to 110°C in an oven, and require both pre-and post weighing of the sample pan and sample (ASTM designations: D2369 and D2926-80). The new procedures using the commercial Mark 3 solids analyzer purchased from Sartorius, or SMART Turbo™ purchased from CEM, take only 2 to 10 minutes, depending on the volatile/moisture content and viscosity of the material.

The compositions of the present invention advantageously further contain small amounts, preferably from 0.005 to 1 % by weight, based on the total weight of the composition, of at least one surface active compound (surfactant), more preferably from 0.02 to 0.5 %, still more preferably from 0.025 to 0.3 %. The surfactant is important for good wetting of the substrate resulting in satisfactory cosmetics of the final coating. Said surfactant can include for example poly(alkylene glycol)-modified polydimethylsiloxanes or polyheptamethylsiloxanes, or fluorocarbon-modified polysiloxanes. Preferred surfactants are fluorinated surfactant such as Novec® FC-4434 from 3M (non ionic surfactant comprising fluoroaliphatic polymeric esters), Unidyne™ NS-9013, and EFKA® 3034 from CIBA (fluorocarbon-modified polysiloxane).

The epoxy compounds of the composition are submitted to a polycondensation and/or cross-linking reaction in the presence of an epoxy ring-opening catalyst (compound (c)). Preferred catalysts found to be able to cure the epoxy composition at temperatures low enough (preferably ≤ 110°C, more preferably ≤ 100°C) not to damage the underlying substrate or cause adverse affects to other coatings or coating components includes (strong) acid catalysts, ammonium salts of metal anions and aluminum-based compounds, designed for ring opening polymerization of cyclic ether groups.

In order to obtain storage-stable heat curable compositions, the catalyst should not catalyze the epoxy ring-opening at room temperature, to prevent premature polymerization or formation of pre-polymers in the coating compositions with time during storage or while in production, thus extending the pot-life and shelf-life thereof without evolution of performance with time. In this regard, the catalyst is preferably a blocked catalyst or a latent catalyst (such as a buffered acid catalyst), blocked catalyst being preferred as latent catalysts may still react at ambient temperature and cause the composition to slightly evolve with time. Blocked catalysts will not react until reaching their respective deblocking temperatures. The preferred catalysts are inactive at ambient temperature (20°C) and activated to catalyze epoxy ring-opening only upon heating, generally to 70-80°C or more.

Exemplary blocked or latent catalysts are based on trifluoromethanesulfonic acid (triflic acid), dinonylnaphthalene sulfonic acid, dinonylnaphthalene disulfonic acid (DNNDSA), and ammonium antimony hexafluoride (a Lewis acid), and are available from King Industries for example Nacure® Super A233 (diethylamine salt of trifluoromethanesulfonic acid), Nacure® 155 (a blocked acid catalyst based on DNNDSA), Nacure® Super XC-7231 (now sold under the name K-Pure® CXC 1612, blocked ammonium antimony hexafluoride catalysts), and Nacure® Super XC-A218 (25% solids) (now sold under the name K-Pure® CXC-1613), metal salt of triflic acid, Lewis acid, buffered to reduce its reactivity at ambient temperature), the latter being one of the preferred catalysts. Other useful catalysts include carboxylic acid anhydrides such as hexahydrophthalic anhydride, methylhexahydrophthalic anhydride, or Lewis acid catalysts including $BF_3$ and $BCl_3$ amine complexes.

In another embodiment, catalyst (c) is chosen from aluminum chelates, aluminum acylates and aluminum alcoholates. The composition does preferably not contain other epoxy ring-opening catalysts such as acid catalysts or ammonium salts of metal anions when those aluminum compounds are employed. Aluminum based catalysts cure the present compositions at lower temperatures and in shorter time than the other catalysts cited above (pre-curing and post-curing).

Aluminum acylates and aluminum alcoholates are of preferred general formulae $Ai(OC(0)R)_n(OR')_{3-n}$ and $Al(OSiR''_3)_n(OR')_{3-n}$, wherein R and R' are linear or branched chain alkyl groups containing from 1 to 10 carbon atoms, R" is a linear or branched chain, alkyl group containing from 1 to 10 carbon atoms, a phenyl moiety, an acylate moiety of formula OC(O)R, wherein R is as defined just hereabove, and n is an integer from 1 to 3. Preferably, R' is an isopropyl or ethyl group, R and R" are methyl groups.

Aluminum chelates may be formed by reacting an aluminum alcoholate or acylate with chelating agents free

from nitrogen or sulfur, comprising oxygen as a coordinating atom, for example acetylacetone, ethyl acetoacetate or diethyl malonate. They may be chosen from aluminum acetylacetonate noted $Al(AcAc)_3$, ethyl mono(acetoacetate) aluminum bisacetylacetonate, ethyl bis(acetoacetate) aluminum monoacetyl acetonate, di-n-butoxy aluminum ethyl mono(acetoacetate) and di-i-propoxy aluminum ethyl mono(acetoacetate). Other examples of such compounds are given in the patent EP 0614957. When the epoxy ring-opening catalyst is an aluminum chelate, the coating composition preferably comprises an organic solvent which boiling temperature at the atmospheric pressure does range from 70 to 140°C, for example ethanol, isopropanol, ethyl acetate, methylethylketone or tetrahydropyrane.

The catalyst is generally used in amounts ranging from 0.01-5 % by weight based on the weight of the composition, preferably from 0.1 to 3.5 % by weight, more preferably from 0.2 to 3 % by weight.

The composition according to the invention generally contains 15-60 % by weight of solids (dry extract weight relative to the weight of the composition), preferably from 20 to 45 %.

The coating composition according to the invention further contains at least one organic solvent, selected from glycol monoethers (compound (e)). The glycol monoether solvent generally exhibits low surface tensions and is preferably selected from alkylene glycol C1-4 alkyl monoethers, more preferably from ethylene glycol C1-4 alkyl monoethers, propylene glycol C1-4 alkyl monoethers, diethylene glycol C1-4 alkyl monoethers, triethylene glycol C1-4 alkyl monoethers, propylene glycol C1-4 alkyl monoethers, dipropylene glycol C1-4 alkyl monoethers, triethylene glycol C1-4 alkyl monoethers, and tripropylene glycol C1-4 alkyl monoethers. The most preferred glycol monoether is propylene glycol methyl ether. Such a compound is sold commercially by Dow Chemical under the name Dowanol PM® as a mixture of 1-methoxy-2-propanol (major isomer) and 2-methoxy-1-propanol.

In one embodiment, solvents (e) are present in an amount ranging from 20 % to 70 % by weight, relative to the total weight of the composition, preferably from 25 to 65 %, 30 to 60 % or 40 to 60 % by weight.

Compounds (e) preferably represent at least 35 % by weight of the total amount of solvents present in the composition, preferably at least 40 %, at least 55 % and at least 70 %. Low amounts of compounds (e) may not allow to satisfactorily solubilize dyes, which are generally hydrophobic compounds.

The inventors have found that compounds (e) were required in the composition to provide good solubility to dyes that may be incorporated therein, longer shelf life for the coating solutions and to achieve better cosmetic properties for the resulting articles such as low haze. Due to the high solubility of dyes in the present sol-gel compositions, high levels of light protection can be achieved.

Additional solvents can be used, such as alkanols (methanol, ethanol, propanol...), ketones, propylene carbonate or water. Hydrochloric acid that may be used as an acidic catalyst for compounds (b) counts as a solvent.

The total amount of solvents depends on the resins used, on the type of optical article and on the coating process. The purpose of the solvents is to achieve good surface wetting and a specific coating viscosity range determined by the coating equipment used to achieve a specific coating thickness range. The solvents typically represents from 20 to 75 % of the weight of the composition, preferably from 35 to 70 %, more preferably from 45 to 65 %.

In one embodiment of the invention, the composition comprises from 20 to 50 % by weight relative to the total weight of the composition of monomers (a), (d) (if present) and compounds (b) and from 25 to 60 % by weight of at least one organic solvent selected from glycol monoethers (e), relative to the total weight of the composition.

The composition can also include at least one compound, or a hydrolyzate thereof, of formula $M(Z)_y$, wherein M represents a metal or a metalloid, preferably Si, the Z groups, being the same or different, are hydrolyzable groups and y, equal to or higher than 4, is the metal or metalloid M valence. Such compounds are described in detail in US 2011/0058142. The preferred compounds are compounds of formula $Si(Z)_4$, wherein the Z groups, being the same or different, are hydrolyzable groups, such as tetraethoxysilane.

According to the invention, the coating composition can comprise at least one absorbing dye as compound (g), which at least partially inhibits transmission of light in at least one selected wavelength range included within the 100-380 nm wavelength range (UV range), the 380-780 nm wavelength range (visible range), and/or the 780-1400 nm wavelength range (near infrared range). Said dye may refer to both a pigment and a colorant, i.e., can be insoluble or soluble in its vehicle. The dye can be water-based or (organic) solvent-based.

In a preferred embodiment, the selected spectral range within the 380-780 nm region of the electromagnetic spectrum is 400 nm to 500 nm, i.e., the blue wavelength range, more preferably the 415-455 nm range or the 420-450 nm range.

In the present disclosure, the (absorbing) dye will be referred to as a blue light blocking dye when the selected wavelength range is 400-500 nm, and is typically a yellow dye.

The optical article comprising a dye inhibits transmission of incident light through at least one geometrically defined surface of the substrate of the optical article, preferably an entire main surface. In the present description, unless otherwise specified, light blocking is defined with reference to an angle of incidence ranging from 0° to 15°, preferably 0°.

The dye preferably at least partially inhibits transmission of light within the 415-455 nm wavelength range by absorption, more preferably within the 420-450 nm range, in order to provide a high level of retinal cell protection against retinal cell apoptosis or age-related macular degeneration.

It may be particularly desirable in some cases to selectively filter a relatively small portion of the blue spectrum, i.e., the 420 nm - 450 nm region. Indeed, blocking too much of the blue spectrum can interfere with scotopic vision and mechanisms for regulating biorhythms, referred to as "circadian cycles". Thus, in a preferred embodiment, the dye blocks less than 5 % of light having a wavelength ranging from 465 to 495 nm, preferably from 450 to 550 nm. In this embodiment, the dye selectively inhibits the phototoxic blue light and transmits the blue light implicated in circadian rhythm. Preferably, the optical article transmits at least 95 % of light having a wavelength ranging from 465 to 495 nm. This transmittance is an average of light transmitted within the 465-495 nm range that is not weighted according to the sensitivity of the eye at each wavelength of the range. In another embodiment, the dye does not absorb light in the 465-495 nm range, preferably the 450-550 nm range. In the present description, unless otherwise specified, transmittances/transmissions are measured at the center of the optical article for a thickness ranging from 0.5 to 2.5 mm, preferably 0.7 to 2.0 mm, more preferably 0.8 to 1.5 mm, at an angle of incidence ranging from 0° to 15°, preferably 0°.

In one embodiment, the dye does not absorb, or very little, in regions of the visible spectrum outside the selected wavelength range, preferably the 400-500 nm wavelength range, to minimize the appearance of a plurality of colors. In this case, the dye selectively inhibits transmission of light within the selected wavelength range, preferably the 400-500 nm wavelength range, more preferably in the 415-455 nm or 420-450 nm ranges. As used herein, a dye "selectively inhibits" a wavelength range if it inhibits at least some transmission within the specified range, while having little or no effect on transmission of wavelengths outside the selected wavelength range, unless specifically configured to do so.

The dye preferably has an absorption peak, ideally a maximum absorption peak, within the 380-780 nm range, more preferably the 400-500 nm range. Certain dyes are interesting in that they have a narrow absorption peak, thus providing selective absorption filters having a bandwidth in some cases of for example 20 nm or less in the selected range of wavelengths. The selectivity property may be in part provided by the symmetry of the dye molecule. Such selectivity helps to limit the distortion of the visual perception of color, to limit the detrimental effects of light filtering to scotopic vision and to limit the impact on circadian rhythm.

The dyes according to the invention are generally compatible with most coating components. They are processed in a way such that they are well and stably distributed or dispersed in the matrix of the coating, providing transparent clear optical articles with low haze.

The chemical nature of this dye is not particularly limited, provided that it has an absorption peak, ideally a maximum absorption peak, within the 400-500 nm range.

In certain embodiments, the dye comprises one or more porphyrins, porphyrin complexes, other heterocycles related to porphyrins, including corrins, chlorins and corphins, derivatives thereof, or the perylene, coumarin, acridine, indolenin (also known as 3H-indole), anthraquinone, azobenzene, phthalocyanine, cyanines, quinoline, benzotriazole, nitrobenzene, isoquinoline, isoindoline, diarylmethane and indol-2-ylidene families. Derivatives are substances generally issued by an addition or substitution. The preferred dyes are diarylmethane dyes such as auramine O and porphyrin dyes.

The dye may include one or more dyes from the group consisting of: coumarin 343; coumarin 314; nitrobenzoxadiazole; lucifer yellow CH; 9,10-bis(phenylethynyl)anthracene; proflavin; 4-(dicyanomethylene)-2-methyl-6-(4-dimethyl aminostyryl)-4H-pyran; 2-[4-(dimethylamino)styryl]-1-methypyridinium iodide, lutein, zeaxanthin, LUMOGEN® F Yellow 083, T890, and yellow dyes having a narrow absorption peak available from Exciton Inc. such as ABS-419®, ABS-420® or ABS-430®.

In one embodiment, the composition further comprises at least one color balancing agent and/or optical brightener in order to at least partially offset the color imparted by the dye.

More details concerning this embodiment, such as the arrangement of the color-balancing component relative to the system blocking blue light wavelengths, and exemplary systems including a blue blocking component and a color-balancing component can be found e.g. in US 8,360,574, WO 2007/146933, WO 2015/097186 and WO 2015/097492.

The amount of dye used in the present invention is an amount sufficient to provide a satisfactory inhibition of light within the 100-380 nm, 380-780 nm and/or 780-1400 nm wavelength range. For example the dye can be used at a level of 0.005 to 0.50 % or 0.01 to 0.2 % based on the weight of the coating composition, depending on the strength of the dye and the amount of inhibition/protection desired. It should be understood that the invention is not limited to these ranges, which are only given by way of example.

The optical article of the invention limits or avoids the photo-degradation of dyes that are generally sensitive to light, in particular UV light, without the need to use UV absorbers and/or free radical scavengers in the coating composition, in another layer or in the substrate, and without the need to use another coating protecting the dye from photo-degradation such as an interferential filter absorbing or reflecting UV light or acting as an oxygen barrier protection.

The composition can further include particles of at least one metal oxide or metalloid oxide (filler) to increase the hardness of the coating, and optionally adapt the refractive index of the resulting coating. They are used under a colloidal form (compound (f)).

Colloidal particle preparation requires well known methods. As used herein, "colloids" are fine particles the mean diameter of which (or the largest size of which in case of elongated particles) is less than 150 nm, more preferably less than 100 nm, dispersed within a dispersing medium such as water, an alcohol, a ketone, an ester or combinations

thereof, preferably an alcohol such as methanol, ethanol, isopropanol or a glycol monoether according to the invention (compound (e)). With such low mean particle diameter, the transparency of the coating is not affected. Preferred colloidal particle diameters range from 2 to 100 nm, from 2 to 50 nm, from 5 to 40 nm and from 5 to 25 nm. The size of the particles in the liquid is determined by conventional methods such as light scattering, and particles size analyzer. The size of the particles in the solid is determined by tunneling electron microscope or light scattering.

In some embodiments, colloidal particles may be made of a mixture of small sized-particles, for example having a diameter of from 10 to 15 nm and of larger sized- particles, for example having a diameter of from 30 to 80 nm.

Non-limiting examples of such oxide colloidal particles include particles of silicon oxide (preferably $SiO_2$), aluminum oxide, zirconium oxide, alumina-doped silicon oxide, indium-doped tin oxide (ITO), antimony-doped tin oxide (ATO), aluminum-doped zinc oxide, tin oxide ($SnO_2$), zinc oxide (ZnO), indium oxide ($In_2O_3$), $TiO_2$, $Sb_2O_3$, $Sb_2O_5$, $Y_2O_3$, $Ta_2O_5$, $La_2O_3$, $Fe_2O_3$, $WO_3$, vanadium pentoxide, cerium oxide, zinc antimonate, indium antimonate or a mixture of two or more thereof, colloidally dispersed in a dispersion medium. The last two compounds and the method for preparing the same are described in the patent US 6,211,274.

The most preferred colloidal particles of at least one metal oxide or metalloid oxide are silica, $Al_2O_3$, $ZrO_2$ and $TiO_2$ colloids, preferably silica. These particles may be prepared by the Stober method or are commercially available.

The composition preferably comprises from 1 to 50 % by weight of compounds (f), more preferably from 5 to 40 %, even more preferably from 10 to 35 % or 20 to 33 %, relative to the total weight of the composition (this weight naturally includes the dispersing medium). The dry extract weight of compounds (f) generally represents from 10 to 50 %, preferably from 15 to 45 %, more preferably from 18 to 40 %, even more preferably from 20 to 35 %, of the dry extract weight of the composition.

The composition can further include various additives such as curing/cross-linking agents (e.g. silane coupling agents or co-monomers such as polyamines, polythiols, polyols, polycarboxylic acids), rheology modifiers, flow and leveling additives, wetting agents, antifoaming agents, stabilizers, UV absorbers and free radical scavengers (such as hindered amine light stabilizers and antioxidants). The composition can be a solution or a dispersion.

The invention also relates to a process to manufacture an optical article such as herein described, comprising:

(i) depositing on at least one main surface of the substrate of the optical article a heat-curable composition according to the invention,
(ii) heating the optical article coated with said heat-curable composition to a temperature higher than or equal to 60°C so as to form a tack-free coating,
(iii) heating the optical article coated with said tack-free coating to a temperature higher than or equal to the temperature of step (ii) so as to obtain a completely cured coating.

The epoxy coating of the invention is formed on the substrate of the optical article and can be in direct contact with said substrate. In another embodiment, at least one coating is interleaved between the substrate and the present epoxy coating.

The deposition is preferably carried out by spin coating or dip coating, and more preferably by dip coating. The excellent storage stability and good viscosity performance of the heat curable compositions allow coating of optical articles by simply dipping them into a bath containing the heat-curable composition.

Curing the heat-curable composition is generally performed in two steps, a first pre-curing step (partial curing, step (ii)) to a temperature of at least 60°C, preferably at least 70°C, more preferably at least 75°C, typically from 60°C to 100°C or from 75°C to 90°C, generally for at least 5 minutes, preferably from 10 to 25 or 30 minutes, typically 15 minutes, so as to form a tack-free coating (to the touch), and a second step of heating the optical article coated with the tack-free coating to a temperature higher than or equal to the temperature of the pre-curing step (post-curing step (iii)), preferably at least 90°C or 95°C, more preferably at least 100°C, typically from 100 to 140°C, preferably from 100 to 115°C, for 1 to 3 hours, generally at least two hours, preferably for 2.5 to 3.5 hours, typically 3 hours, so as to obtain a higher level of curing, preferably a completely cured coating. The process leads to transparent clear coatings with low haze.

The thickness of the cured coating may be adapted to the specific application required and generally ranges from 0.5 to 50 $\mu$m, preferably from 1 to 20 $\mu$m, more preferably from 2 to 10 $\mu$m. The coating thickness can be easily adjusted by modifying the solvent concentration of the claimed compositions and the coating conditions, for example the withdrawal speed in case of deposition by dip coating. The longer the withdrawal time, the thinner will be the final dry coating.

The refractive index of the cured coating, which may be adapted, for example, by including colloidal particles of at least one metal oxide or metalloid oxide, generally ranges from 1.48 to 1.65. In one embodiment, the refractive index of the cured coating ranges from 1.48 to 1.53. In another embodiment, the refractive index of the cured coating ranges from 1.55 to 1.65.

The substrate’s main surface can be coated with several functional coating(s) to improve its optical and/or

mechanical properties. The term "coating" is understood to mean any layer, layer stack or film, which may be in contact with the substrate and/or with another coating, for example a sol-gel coating or a coating made of an organic resin. A coating may be deposited or formed through various methods, including wet processing, gaseous processing, and film transfer. The functional coatings used herein can be selected from, without limitation to these coatings, an impact-resistant coating, an additional abrasion-resistant and/or scratch-resistant coating, an antireflection coating, a polarized coating, a photochromic coating, an antistatic coating, an anti-fouling coating (hydrophobic and/or oleophobic coating), an antifog coating, a precursor of an antifog coating or a stack made of two or more such coatings.

The primer coatings improving the impact resistance and/or the adhesion of the further layers in the end product are preferably polyurethane latexes or acrylic latexes. Primer coatings and abrasion-resistant and/or scratch-resistant coatings may be selected from those described in the application WO 2007/088312.

Abrasion- and/or scratch-resistant coatings (hard coatings) are preferably hard coatings based on poly(meth)acrylates or silanes. Recommended hard abrasion- and/or scratch-resistant coatings in the present invention include coatings obtained from silane hydrolyzate-based compositions (sol-gel process), in particular epoxysilane hydrolyzate-based compositions such as those described in the US patent application US 2003/0165698 and in US 4,211,823 and EP 614957.

In one embodiment, the optical article does not comprise any abrasion- and/or scratch-resistant coating other than that resulting from heat curing of the coating composition according to the invention.

The antireflection coating may be any antireflection coating traditionally used in the optics field, particularly ophthalmic optics. As is also well known, antireflection coatings traditionally comprise a monolayered or a multilayered stack composed of dielectric materials (generally one or more metal oxides) and/or sol-gel materials and/or organic/inorganic layers such as disclosed in WO 2013/098531. These are preferably multilayered coatings, comprising layers with a high refractive index (HI) and layers with a low refractive index (LI).

The structure and preparation of antireflection coatings are described in more details in patent application WO 2010/109154, WO 2011/080472 and WO 2012/153072.

The antifouling top coat is preferably deposited onto the outer layer of the antireflective coating. As a rule, its thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012076714.

Coatings such as primers, hard coats, antireflection coatings and antifouling coatings may be deposited using methods known in the art, including spin-coating, dip-coating, spray-coating, evaporation under vacuum, sputtering, chemical vapor deposition and lamination. The coatings are preferably directly deposited on one another. These coatings can be deposited one by one, or a stack of one or more coatings can be formed on the substrate, for example by lamination.

The epoxy coating according to the invention can be applied in different coating configurations to maintain or improve general coating performances while still showing low haze and good adhesion, with or without primer coatings or hard coats.

As the present epoxy coating provides caustic resistance, it can also be used as an external layer deposited directly onto the substrate or functional coatings. In another embodiment, it is used as a protective coating to protect against scratches or similar cosmetic defects resulting from physical handling an underlying layer or substrate such as a photochromic layer, as disclosed in WO 2011/075128 or US 6,268,055.

In one embodiment, the present optical article is prepared by forming on the substrate the epoxy coating in a first manufacturing site, while the other coatings are formed in a second manufacturing site.

The optical article according to the invention preferably has a relative light transmission factor in the visible spectrum Tv higher than or equal to 85 or 87 %, preferably higher than or equal to 90 %, more preferably higher than or equal to 92 %, and better higher than or equal to 95 %. Said Tv factor preferably ranges from 87 % to 98.5 %, more preferably from 88 % to 97 %, even better from 90 % to 96 %. The Tv factor, also called "luminous transmission" of the system, is such as defined in the standard NF EN 1836 and relates to an average in the 380-780 nm wavelength range that is weighted according to the sensitivity of the eye at each wavelength of the range and measured under D65 illumination conditions (daylight).

The following examples illustrate the present invention in a more detailed, but non-limiting manner. Unless stated otherwise, all thicknesses disclosed in the present application relate to physical thicknesses. The percentages given in the tables are weight percentages. Unless otherwise specified, the refractive indexes referred to in the present invention are expressed at 25 °C at a wavelength of 550 nm.

## EXAMPLES

The optical articles used in the examples comprise an ORMA® lens substrate from ESSILOR, having a 65 mm diameter, a refractive index of 1.50, a power of -2.00 diopters and a thickness of 1.2 mm.

Various coating compositions of epoxy copolymers were prepared and are shown in the tables below. The compositions comprise at least one non silicon-containing bi- or tri-functional epoxy monomer comprising two or three epoxy groups (compound (a)), γ-glycidoxypropyltrimethoxysilane (from Evonik Industries) as compound (b) pre-hydrolyzed with 0.10 N HCl, a polymerization catalyst for the epoxy groups (compound (c): Lewis acid Nacure® Super XC-A218, also named K-pure® CXC-1613, metal salt of triflic acid in n-butanol, 25 % wt., from King Industries; or aluminum acetylacetonate $Al(AcAc)_3$), a surfactant (EFKA® 3034, which is a fluorocarbon containing organically modified polysiloxane, 50-53 % wt. in methoxypropanol, sold by CIBA, or Novec® FC-4434, which is a non ionic surfactant comprising fluoroaliphatic polymeric esters, 25 % wt. in dipropylene glycol monomethyl ether, sold by 3M), propylene glycol methyl ether (Dowanol® PM from Dow Chemical Company) and optionally methanol as a solvent.

The following non silicon-containing bi- or tri-functional epoxy monomers comprising two or three epoxy groups were investigated (compounds (a)): Erisys™ GE-30 (trimethylolpropane triglycidyl ether, abbreviated as GE-30, from CVC thermoset Specialties) and UVACure® 1500 (3',4'-epoxycyclohexylmethyl-3,4-epoxycyclohexanecarboxylate, cycloaliphatic diepoxy compound from Allnex USA Inc.).

The following non silicon-containing polyfunctional epoxy monomer comprising from 4 to 8 epoxy groups was used in some examples (compound (d)): Erisys™ GE-60 (sorbitol polyglycidyl ether, abbreviated as GE-60, from CVC thermoset Specialties).

Other optional compounds can be included in some compositions, such as colloidal silica (PGM-ST® from Nissan Chemical Industries, 30 % wt. dispersion in propylene glycol mono methyl ether, particle size 10-15 nm), colloidal zirconia/tin oxide (NanoUse® OZ-S30M from Nissan Chemical Industries, 30.5 % wt. dispersion in methanol of zirconium oxide/tin oxide-containing particles, particle size 7 nm) and a blue light blocking dye (ABS-420® or ABS-430®, which are yellow dyes available from Exciton Inc.; T890, which is a porphyrin dye available from Frontier Scientific; or LUMOGEN® F Yellow 083, which is a perylene dye available from BASF).

The structures of some of the various epoxy compounds and dyes that have been used are recalled hereunder:

| Epoxy compound | Glymo | Erisys™ GE-30 | Erisys™ GE-60 | UVACure® 1500 | EPALLOY® 9000 |
|---|---|---|---|---|---|
| Structure | 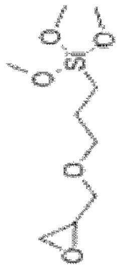 | 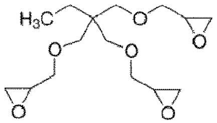 | 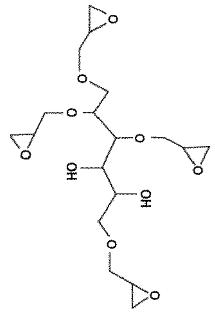 | 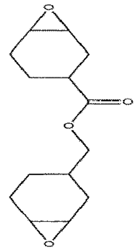 | 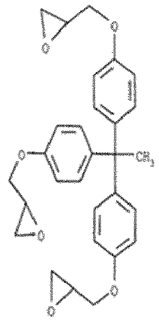 |

| Dye | T890 | LUMOGEN® F Yellow 083 |
|---|---|---|
| Structure | 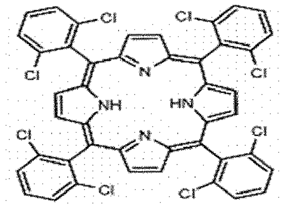 | 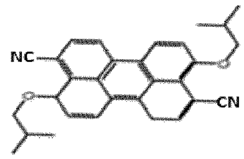 |

Evaluation of the coating performances after curing

a) Abrasion resistance and haze were determined as disclosed in WO 2012/173596. Specifically, abrasion resistance was measured by means of the sand Bayer test, in accordance with the ASTM F735-81 standard. Haze was measured on a Haze-Gard XL-211 Plus apparatus from BYK-Gardner in accordance with the standard ASTM D1003-00. As haze is a measurement of the percentage of transmitted light scattered more than 2.5° from the axis of the incident light, the smaller the haze value, the lower the degree of cloudiness. Generally, for optical articles described herein, a haze value of less than or equal to 0.3 % is acceptable, more preferably of less than or equal to 0.2 %.
b) The hand steel wool test for determining scratch resistance of optical articles is described in WO 2010/049503, in the name of the Applicant. A lower score means a higher scratch-resistance.
c) The light transmission factor in the visible spectrum Tv was measured in transmission mode (incidence angle: 0°) from a wearer's view angle using a Cary 4000 spectrophotometer from Hunter, with the back (concave) side of the lens (2 mm thickness at the center) facing the detector and light incoming on the front side of the lens. Tv was measured under D65 illumination conditions (daylight).
d) Protection from phototoxic blue light by the inventive coating can be evidenced by calculating the mean blue light protection factor BVC between 400 nm and 450 nm, weighted by the light hazard function B'(λ), based on the transmission spectrum. Such factor is defined through the following relation and measured at 0° incidence:

$$BVC = 100\% - \frac{\int_{400}^{450} B'(\lambda).T(\lambda).d\lambda}{\int_{400}^{450} B'(\lambda).d\lambda}$$

wherein T(λ) represents the lens transmission factor at a given wavelength, measured at an incident angle between 0 to 17°, preferably at 0°, and B'(λ) represents the light hazard function shown on figure 1 of publication WO 2017/077359, in the name of the Applicant (relative spectral function efficiency). Said light hazard function results from work between Paris Vision Institute and Essilor International. It can be seen on this figure that blue light is the most dangerous to human eye at 428-431 nm. A few values of the B'(λ) function between 400 and 450 nm are given hereunder:

| Wavelength (nm) | Weighting coefficient B'(λ) |
|---|---|
| 400 | 0.1618 |
| 410 | 03263 |
| 420 | 0.8496 |
| 430 | 1.00 |
| 440 | 0.6469 |
| 450 | 0.4237 |

e) Resistance of the inventive coating to photo-degradation was evaluated following exposure to the sun conditions of the Q-sun test. The Q-sun test consists in introducing the prepared articles in a Q-SUN® Xe-3 xenon chamber, reproducing full spectrum sunlight, purchased from Q-LAB, at a relative humidity of 20% (± 5%) and at a temperature of 23° C (±

5° C), and exposing their convex side to irradiation for 40h or 80h. The articles were measured by Cary 4000 spectrophotometer again to get a new transmission spectrum and calculate a new BVC factor and BVC loss caused by the Q-sun test.

f) A dry adhesion test, referred to as a crosshatch tape peel adhesion test, was performed on coated articles in accordance with ISTM 02-010, using 3M SCOTCH® n° 600 transparent tape, such as disclosed in US 7476415 and US 2014/037964, after they have been subjected to the Q-Sun test described above.

Preparation, deposition and curing of the coating compositions

Epoxy compounds (a) and (d) (when present) were mixed in a Nalgene container at room temperature. The solvent (generally Dowanol® PM) was added and the solution was allowed to stir for 30-60 minutes. The surfactant, dye and optional components such as colloidal particles were added and the mixture allowed to mix for 30-60 more minutes.

Compound (b), typically Glymo, was hydrolyzed separately by mixing with 0.1N HCl for 0.3-1hr, and then added to the other ingredients. Stirring was continued for another 20-30 minutes. An ultrasonication or agitation process was sometimes used to obtain more uniform solutions.

In the coatings utilizing the blocked and buffered catalysts from King Industries, the catalyst was added after mixing the epoxies, solvent and optional dyes together and before adding the hydrolyzed Glymo. In the coatings utilizing $Al(AcAc)_3$, the catalyst was added last (after adding the hydrolyzed Glymo to the epoxy/solvent/dye mixture).

Each of the coating solutions was deposited by dip coating on both faces of an Orma® lens previously cleaned with diluted NaOH (500 rpm for 5s, then 1000 rpm for 10s), at a withdrawal speed of 2.5-3.0 mm/s. The resulting wet coatings were pre-cured at 75-80°C generally for 15 minutes and post-cured at 100-110°C for 3 hours. The (dry) coating thicknesses were 3.5 ± 0.5μm (6-8 μm for examples 9-10).

The results are shown in the tables below.

| Example | | 1 | 2 | 3 | 4 | C1 |
|---|---|---|---|---|---|---|
| Epoxy compound | (d) GE-60 (%) | 0.44 | 0 | 0.29 | 0.37 | 1.02 |
| | (a) GE-30 (%) | 0.90 | 0 | 0.59 | 0.76 | 2.07 |
| | (a) UVACure® 1500 (%) | 3.65 | 3.26 | 2.39 | 3.09 | 8.43 |
| | (b) Glymo (%) | 31.73 | 34.58 | 34.58 | 26.85 | 24.41 |
| (c) Nacure® Super XC-A218 (%) | | 0.72 | 0.47 | 0.47 | 0.61 | 1.65 |
| EFKA® 3034 (%) | | 0.1 | 0.1 | 0.1 | 0.1 | 0.1 |
| (e) Dowanol® PM (%) | | 55.18 | 53.65 | 53.64 | 40.06 (x) | 56.71 |
| HCl 0.1 N (%) | | 7.27 | 7.92 | 7.92 | 6.15 | 5.59 |
| (f) Colloidal silica (%) (*) | | 0 | 0 | 0 | 22.00 | 0 |
| (g) Dye (%) (**) | | 0.02 | 0.02 | 0.02 | 0.02 | 0.02 |
| Dry extract weight of the composition (%) | | 27.69 | 27.92 | 27.92 | 30.04 | 29.27 |
| Dry extract weight of compounds (a) (%) | | 16.4 | 11.7 | 10.7 | 12.8 | 35.9 |
| Dry extract weight ratio [(a)+(d)] / (b) | | 0.222 | 0.133 | 0.134 | 0.222 | 0.667 |
| Sand Bayer | | 2.6 | 2.7 | 2.8 | 3.9 | 1.9 |
| Hand steel wool | | 3 | 3 | 3 | 3 | 5 |
| Initial BVC (%) | | 25.6 | 24.8 | 25.2 | 26.0 | 26.1 |
| Loss % of BVC after 40h Q-sun test | | 10 | 8 | 10 | 7 | 9 |

(*) PGM-ST. (**) ABS-420. (x) 55.46 % including compounds (e) brought by colloids.

| Example | | C2 | C3 | C4 | 5 | 6 |
|---|---|---|---|---|---|---|
| Epoxy compound | (d) GE-60 (%) | 0 | 0 | 0 | 0 | 0 |
| | (a) GE-30 (%) | 0 | 0 | 0 | 0 | 0 |
| | (a) UVACure® 1500 (%) | 0 | 3.26 | 15.85 | 4.05 | 4.12 |
| | (b) Glymo (%) | 34.58 | 34.58 | 23.27 | 33.57 | 34.21 |
| (c) Nacure® Super XC-A218 (%) | | 0.47 | 0.47 | 0.55 | 0.48 | 0.48 |
| EFKA® 3034 (%) | | 0.1 | 0.1 | 0.1 | 0.14 | 0.12 |
| (e) Dowanol® PM (%) | | 53.76 | 0 | 0 | 27.44 | 33.54 |
| HCl 0.1 N (%) | | 7.92 | 7.92 | 5.33 | 7.69 | 7.84 |
| Methanol (%) (*) | | 0 | 53.65 | 54.97 | 26.62 | 19.68 |
| (g) Dye (%) (**) | | 0.02 | 0.02 | 0.02 | 0.02 | 0.02 |
| Dry extract weight of the composition (%) | | 24.66 | 27.92 | 32.52 | 28.01 | 28.52 |
| Dry extract weight of compounds (a) (%) | | 0 | 11.7 | 48.7 | 14.5 | 14.5 |
| Dry extract weight ratio [(a)+(d)] / (b) | | 0 | 0.133 | 0.963 | 0.170 | 0.170 |
| Composition appearance | | Translucent | Turbid | Translucent | Clear | Clear |
| Precipitates after composition freezer storage | | Small amount | Large amount | Small amount | No | No |
| Coating haze (%) | | 0.8 | 0.6 | 0.5 | ≤ 0.1 | ≤ 0.1 |

(*) Does not take into account MeOH released from Glymo. (**) ABS-420.

| Example | | 7 | 8 | 9 | 10 | 11 | 12 | 13 |
|---|---|---|---|---|---|---|---|---|
| Epoxy compound | (d) GE-60 (%) | 0 | 0 | 0 | 0 | 0 | 0 | 0 |
| | (a) GE-30 (%) | 2.3 | 0.8 | 1.6 | 0.5 | 0 | 1.01 | 0 |
| | (a) UVACure® 1500 (%) | 3.7 | 0 | 6.02 | 4.71 | 5.21 | 3.34 | 4.16 |
| | (a) Epalloy® 9000 (%) | 0 | 5.2 | 0 | 0 | 0 | 0 | 0 |
| | (b) Glymo (%) | 17.9 | 19.7 | 40.48 | 33.58 | 26.71 | 26.17 | 26.88 |
| (c) $Al(AcAc)_3$ (%) | | 0.6 | 0.6 | 0.56 | 0.52 | 0.61 | 0.57 | 0.60 |
| Novec® FC-4434 (%) | | 0.1 | 0.1 | 0.20 | 0.20 | 0.02 | 0.02 | 0.02 |
| (e) Dowanol® PM (%) (x) | | 38.3 | 47.1 | 42.33 | 24.88 | 39.37 | 41.91 | 40.12 |
| HCl 0.1 N (%) | | 4.1 | 4.5 | 8.77 | 7.27 | 6.12 | 6.00 | 6.16 |
| (f) Colloidal particles (%) (*) | | 33.0 | 22.0 | 0 | 28.31 | 21.95 | 20.96 | 22.05 |
| (g) Dye (%) (**) | | 0.02 | 0.02 | 0.04 | 0.03 | 0.016 | 0.018 | 0.02 |
| Dry extract weight of the composition (%) | | 29.38 | 27.28 | 36.91 | 38.06 | 31.33 | 29.75 | 30.42 |
| Dry extract weight of compounds (a) (%) | | 20.4 | 22.0 | 20.6 | 13.7 | 16.6 | 14.6 | 13.7 |
| Dry extract weight ratio [(a)+(d)] / (b) | | 0.473 | 0.430 | 0.266 | 0.219 | 0.276 | 0.235 | 0.219 |
| Sand Bayer | | 3.3 | 3.1 | 3.2 | 4.3 | | | |
| Initial BVC (%) | | 26.4 | 25.5 | 64.2 | 47.9 | | | |
| Loss % of BVC after 40h Q-sun test | | 11 | 3 | 9 | 7 | | | |
| Refractive index at 633 nm | | 1.56 | 1.58 | 1.51 | 1.50 | | | |

(*) NanoUse® OZ-S30M in examples 7-8; PGM-ST in examples 10-13.

(**) ABS-420 in example 7-10; T890, ABS-430 and LUMOGEN® F Yellow 083 respectively in examples 11, 12 and 13.

(x) For examples 10-13, the total amounts of compounds (e) in the composition are respectively 44.7 %, 54.74 %, 56.58 % and 55.56 %, since colloids also comprise compounds (e).

The coatings according to the invention cured using various catalysts showed low haze (0.1% or less), with no dye particles or aggregates observed in the coatings under microscope 500X (Keyence microscope). They passed adhesion tests after 80h Q-sun test exposure. The Sand Bayer results of these coatings were 2.6 - 4.3, depending on the weight percentage of compound (b) or the addition of mineral oxide nanoparticles, which demonstrates very good abrasion resistance, considering the fact that the epoxy coatings have been directly deposited onto lenses, without surrounding coatings. Scratch resistance was also high. The blue light cut performances were good or very high, ranging from 25 to 65%, with low photo-degradation (<15%) after 40h Q-sun exposure.

Comparative example C1 reveals that a too high amount of compounds (a) in the composition (more than 10 % by weight, relative to the total weight of the composition) leads to a decrease in both the abrasion-resistance and scratch-resistance properties.

A comparison of example 2 with comparative example C2 reveals that the presence in the composition of an epoxy monomer having two or three epoxy groups, which is not a silicon compound having at least one hydrolyzable group directly linked to the silicon atom (compound (a)) allows to obtain a coating composition that is not translucent. In comparative example C2 (without compound (a)), a small amount of dye particles were observed in the composition, which was semi-transparent. The resulting coating exhibited high haze.

A comparison of example 2 with comparative example C3 (or C4) reveals that the presence in the composition of an organic solvent selected from glycol monoethers (compound (e)) allows to obtain a coating composition that is not turbid. In comparative example C3, where compound (e) was replaced with methanol, a large amount of dye particles were observed in the composition, which was completely non-transparent. The resulting coating exhibited high haze.

A microscopic study revealed the presence of dye aggregates in the coatings of comparative examples C2, C3 and C4. As explained above, such aggregates are not present in coatings prepared according to the invention.

Since sol-gel hard coat solutions are normally stored in freezer for longer shelf life, storage stability of the prepared solutions in the freezer at -18°C was investigated. While the inventive sol-gel solutions remain clear without any precipitate for an at least 10- month storage, the compositions of comparative examples C2 to C4 precipitated at different levels within one day, and precipitated a lot after 6 days of freezer storage.

Therefore, the presence of both compounds (a) and (e) in the composition is required to provide good solubility to dyes, longer shelf life for the coating solutions and to achieve better cosmetic properties for the final articles.

In examples 7-8, Epalloy® 9000 monomer (compound (a)) and/or high refractive index colloidal particles (NanoUse® OZ-S30M) were used to prepare high refractive index blue light blocking coatings (n = 1.56-1.58).

In examples 9-10, higher concentrations of blue light cutting dyes were used to achieve articles with high protection from blue light (BVC: 48-64%).

In examples 11-13, three other blue light blocking dyes were investigated. They could be fully dissolved in the sol-gel coating composition to provide coatings having similar properties to those of examples 1-10.

## Claims

1. Heat-curable composition comprising:

   (a) at least one epoxy monomer having two or three epoxy groups, which is not a silicon compound having at least one hydrolyzable group directly linked to the silicon atom,
   (b) at least one epoxy compound bearing at least one silicon atom having at least one hydrolyzable group directly linked to the silicon atom and at least one function comprising an epoxy group linked to the silicon atom through a carbon atom, and/or a hydrolyzate thereof,
   (c) at least one epoxy ring-opening catalyst,
   (e) at least one organic solvent selected from glycol monoethers, and

   monomers (a) represent less than 10 % by weight, relative to the total weight of the composition.

2. The composition according to claim 1, further comprising:

   (d) at least one epoxy monomer comprising from 4 to 8 epoxy groups that is not a silicon compound having at least one hydrolyzable group directly linked to the silicon atom.

3. The composition according to any one of the preceding claims, wherein monomers (a) represent less than 30 % of the dry extract weight of the composition.

4. The composition according to any one of the preceding claims, wherein the ratio: dry extract weight of monomers

(a) and (d) (if present) / dry extract weight of compounds (b) ranges from 5/95 to 40/60.

5. The composition according to any one of the preceding claims, wherein the composition comprises at least 50 % by weight of compounds (b), relative to the total weight of polymerizable compounds present in the composition.

6. The composition according to any one of the preceding claims, comprising from 10 to 60 % by weight of compounds (b) relative to the total weight of the composition.

7. The composition according to any one of the preceding claims, further comprising: (f) colloidal particles of at least one metal oxide or metalloid oxide.

8. The composition according to any one of the preceding claims, further comprising:

(g) at least one absorbing dye that at least partially inhibits transmission of light in at least one selected wavelength range included within the 100-380 nm wavelength range, the 380-780 nm wavelength range, and/or the 780-1400 nm wavelength range.

9. The composition according to any one of the preceding claims, wherein compounds (b) are compounds of formula:

$$R_{n'}Y_mSi(X)_{4-n'-m} \qquad (II)$$

in which the R groups are identical or different and represent monovalent organic groups linked to the silicon atom through a carbon atom and that do not contain any epoxy group, the Y groups are identical or different and represent monovalent organic groups linked to the silicon atom through a carbon atom and contain at least one epoxy group, the X groups are identical or different and represent hydrolyzable groups or hydrogen atoms, m and n' are integers such that m is equal to 1 or 2 and n' + m = 1 or 2.

10. The composition according to any one of the preceding claims, wherein the epoxy groups are chosen from glycidyl groups and cycloaliphatic epoxy groups.

11. The composition according to any one of the preceding claims, wherein solvents (e) are present in an amount ranging from 20 % to 70 % by weight, relative to the total weight of the composition, preferably from 30 to 60 % by weight.

12. The composition according to any one of the preceding claims, wherein the composition comprises from 15 to 60 % by weight relative to the total weight of the composition of monomers (a), (d) (if present) and compounds (b).

13. The composition according to any one of the preceding claims, comprising from 2 to 9 % by weight of monomers (a) and (d) (if present), relative to the total weight of the composition.

14. An optical article comprising a substrate having at least one main surface bearing a coating resulting from the heat-curing of a heat-curable composition according to any one of the preceding claims.

15. An optical article according to claim 14, further defined as an optical lens, preferably an ophthalmic lens.

Europäisches Patentamt
European Patent Office
Office européen des brevets

# EUROPEAN SEARCH REPORT

Application Number
EP 17 30 6651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2011/075128 A1 (ESSILOR INT [FR]; VALERI ROBERT [US]) 23 June 2011 (2011-06-23) * page 11; example 1 * ----- | 1-15 | INV. C08G59/24 C08G59/30 C08G59/32 C08G59/36 C08G59/38 G02B1/10 |
| Y | WO 2013/103334 A1 (ESSILOR INT [FR]; VALERI ROBERT ALAN [US]) 11 July 2013 (2013-07-11) * page 1, lines 27-30 * * page 2, line 30 - page 3, line 14 * ----- | 1-15 | |
| | | | TECHNICAL FIELDS SEARCHED (IPC) |
| | | | C08G G02B |

The present search report has been drawn up for all claims

1

| Place of search | Date of completion of the search | Examiner |
|---|---|---|
| The Hague | 28 May 2018 | Scheunemann, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 30 6651

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2018

| Patent document cited in search report | Publication date | Patent family member(s) | Publication date |
|---|---|---|---|
| WO 2011075128 A1 | 23-06-2011 | AU 2009356743 A1 | 21-06-2012 |
| | | BR 112012014924 A2 | 30-08-2016 |
| | | CN 102656205 A | 05-09-2012 |
| | | EP 2513185 A1 | 24-10-2012 |
| | | ES 2483143 T3 | 05-08-2014 |
| | | US 2012327364 A1 | 27-12-2012 |
| | | WO 2011075128 A1 | 23-06-2011 |
| WO 2013103334 A1 | 11-07-2013 | CN 104039901 A | 10-09-2014 |
| | | EP 2800788 A1 | 12-11-2014 |
| | | US 2014342100 A1 | 20-11-2014 |
| | | WO 2013103334 A1 | 11-07-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008024414 A
- US 2015008370 A
- EP 16306548 A
- WO 2013013929 A
- US 4294950 A
- US 4211823 A
- US 5015523 A
- EP 0614957 A
- US 20090311518 A
- US 20110058142 A
- WO 9410230 A
- US 20120295084 A
- EP 614957 A
- US 8360574 B
- WO 2007146933 A
- WO 2015097186 A
- WO 2015097492 A
- US 6211274 B
- WO 2007088312 A
- US 20030165698 A
- WO 2013098531 A
- WO 2010109154 A
- WO 2011080472 A
- WO 2012153072 A
- WO 2012076714 A
- WO 2011075128 A
- US 6268055 B
- WO 2012173596 A
- WO 2010049503 A
- WO 2017077359 A
- US 7476415 B
- US 2014037964 A


### Non-patent literature cited in the description


- **KITCHEL E.** The effects of blue light on ocular health. *Journal of Visual Impairment and Blindness,* 2000, vol. 94 (6
- **GLAZER-HOCKSTEIN.** *Retina,* 2006, vol. 26 (1), 1-4